# EUROPEAN PATENT APPLICATION

(11) **EP 3 059 661 A1**
(43) Date of publication of application: **24.08.2016**
(21) Application number: 16156212.9
(22) Date of filing: 17.02.2016
(51) Int. Cl.: G06F 3/01, G06F 3/0481, G06K 9/00

(54) **A METHOD FOR INTERACTING WITH STATIONARY DEVICES BY GESTURES AND A SYSTEM FOR INTERACTING WITH STATIONARY DEVICES BY GESTURES**

(30) Priority: 23.02.2015 PL 41133615
(71) Applicant: Samsung Electronics Polska Spolka z organiczona odpowiedzialnoscia, 02-674 Warszawa (PL)
(72) Inventor: Chmielewski, Radoslaw Pawel, 93-509 Lodz (PL)
(74) Representative: Eupatent.pl

(57) **Abstract**

A method for interacting with stationary devices by gestures, comprising receiving, in a processing unit (122) comprising a memory (1221) and a processor (1222), gestures of a user's hand captured using a depth camera (121) and sending commands to stationary devices (101-107) using a router (124), characterized by performing the following steps in the processing unit (122): retrieving from the depth camera (121) a signal representing a series of depth maps, having a bitmap form, for an unoccupied area, calculating an average depth map (ADM) and storing the average depth map (ADM) in the memory (1221); determining positions of the stationary devices (101-107); retrieving from the camera (121) a signal representing a current depth map (CDM), having a bitmap form; calculating a differential depth map (DDM) representing differences between the current depth map (CDM) and the average depth map (ADM); determining a point of gravity (PG) of the user in the differential depth map (DDM), and determining a head point (P1) and a hand point (P2) on the basis of the point of gravity (PG); determining a half-line (P1-P2) extending from the head point (P1) to the hand point (P2); selecting a device (101-107) that is located closest to the half-line (P1-P2) as the selected device; determining a gesture based on a change in the position of the hand point (P2) and a command corresponding to the determined gesture; and sending the command to the selected device (101-107) using the router (124).

## Description

### TECHNICAL FIELD

The present invention relates to a method for interacting with stationary devices by gestures and a system for interacting with stationary devices by gestures.

### BACKGROUND

There is disclosed herein a method and a system that allow a user to interact with various appliances used in homes or offices, such as electronic devices or mechanic-electronic devices. In particular, the present disclosure relates to touchless selecting of a device and controlling its properties using a single hand.

There are known devices, in particular Home Automation Network devices, which are connected to a network, via which properties of these devices can be controlled - such as lamps, TVs, light bulbs, sound sources etc. Such devices are often referred to as "intelligent". Many of these devices are stationary, which means that they do not change their position in the physical space, for example in a house or in an office. Presently, the control of such devices requires dedicated controllers, such as remote control units, which are dedicated for each device and require slightly different methods of interaction. In order to control a large number of devices., the user needs to have skill and experience.

There is a need to develop a user-friendly and intuitive method for touchless controlling of devices by a user, in particular using a single hand.

### SUMMARY

There is disclosed a method for interacting with stationary devices by gestures, comprising receiving, in a processing unit comprising a memory and a processor, gestures of a user's hand captured using a depth camera and sending commands to stationary devices using a router, characterized by performing the following steps in the processing unit : retrieving from the depth camera a signal representing a series of depth maps, having a bitmap form, for an unoccupied area, calculating an average depth map and storing the average depth map in the memory; determining positions of the stationary devices; retrieving from the camera a signal representing a current depth map, having a bitmap form; calculating a differential depth map representing differences between the current depth map and the average depth map; determining a point of gravity (PG) of the user in the differential depth map, and determining a head point (P1) and a hand point (P2) on the basis of the point of gravity (PG); determining a half-line (P1-P2) extending from the head point (P1) to the hand point (P2); selecting a device that is located closest to the half-line (P1-P2) as the selected device; determining a gesture based on a change in the position of the hand point (P2) and a command corresponding to the determined gesture; and sending the command to the selected device using the router.

The method may comprise determining the position of the stationary devices in a room by receiving from the user an indication on the depth map image.

The method may comprise determining the position of the controlled stationary devices in a room by receiving from the user the indication on a floor plan.

The indication on the floor plan of the stationary devices can be specified beyond the camera visibility area.

The method may comprise selecting the controlled device located closest to the half-line (P1-P2) only when it is located within a distance shorter than a predetermined acceptable distance (AD).

There is also disclosed a system for interacting with stationary devices by gestures, comprising a processing unit with a memory and a processor, connected to a depth camera for receiving hand gestures of a user and connected to stationary devices by a router, characterized in that the processing unit is configured to perform the steps of the following method: retrieving from the depth camera a signal representing a series of depth maps, having a bitmap form, for an unoccupied area, calculating an average depth map and storing the average depth map in the memory; determining positions of the stationary devices; retrieving from the camera a signal representing a current depth map, having a bitmap form; calculating a differential depth map representing differences between the current depth map and the average depth map; determining a point of gravity (PG) of the user in the differential depth map, and determining a head point (P1) and a hand point (P2) on the basis of the point of gravity (PG); determining a half-line (P1-P2) extending from the head point (P1) to the hand point (P2); selecting a device that is located closest to the half-line (P1-P2) as the selected device; determining a gesture based on a change in the position of the hand point (P2) and a command corresponding to the determined gesture; and sending the command to the selected device using the router.

### BRIEF DESCRIPTION OF DRAWINGS

The system and method are presented by means of example embodiments on a drawing, in which:
Fig. 1A shows an example of a floor plan with controllable stationary devices.
Fig. 1B shows an example of a processing unit connected to other devices.
Fig. 2 shows a method for interacting with devices.
Figs. 3A-3E show examples of depth map images.
Fig. 4 show possible changes in a position of a point of a hand of a user.

### DETAILED DESCRIPTION

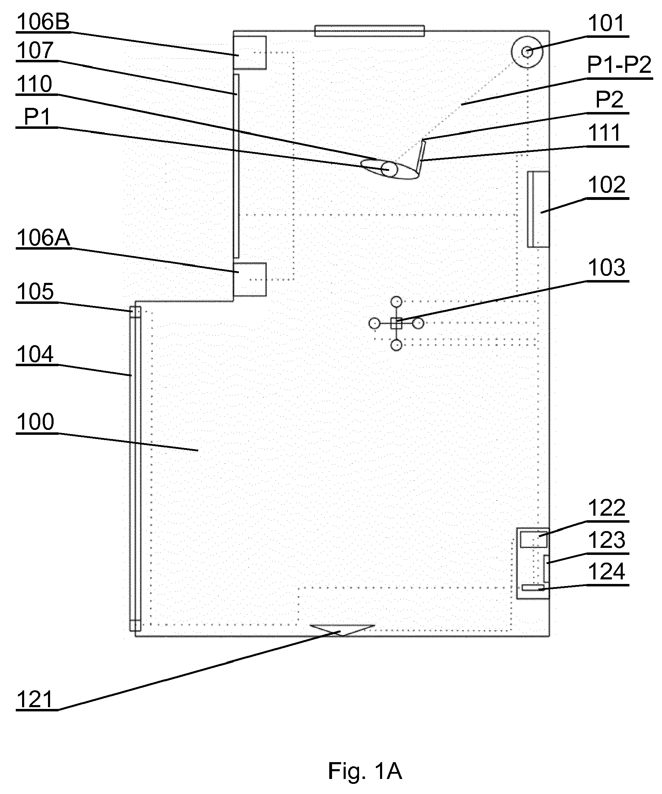

Fig. 1A shows an example of a floor plan 100 with controllable stationary devices. The devices can be for example: a standing lamp 101 (with a light bulb which can be switched on or off or whose intensity and/or light color can be controlled), an air conditioner 102 (with controllable ventilation parameters), a pendant lamp 103 (with a light bulb which can be switched on or off or whose intensity and/or light color can be controlled), a window with blinds 104 (of a controllable dimming level), a blinds lifting mechanism 105 (a drive of a controllable direction of rotation), loudspeakers 106A, 106B (of controllable sound parameters), a TV set 107 (which can be at least switched on or off). The devices in the room are controllable by a user 110 using hand gestures 111. The hand gestures of the user 110 are observed by a depth camera 121, preferably a TOF (Time Of Flight) camera, which determines a distance between its lens and an observed area and calculates the travel time of light signal between the lens and every examined point of the observed area. Various known TOF cameras can be used, for example Kinect available from Microsoft or Senz3D available from Creative. The camera further comprises an accelerometer for calculating the angle of inclination of the camera with respect to the vector of gravity. Other types of cameras can be used as well, for example LIDAR (Light Detection and Ranging) cameras, stereoscopic cameras or pattern projectors. The camera 121 should be mounted so that its field of view should cover the whole area, in which the user is to be allowed to control the devices. The camera 121 is connected to a processing unit 122, which can communicate, through a router 124, with controlled devices 101-107 via a wire or wirelessly (using transmission protocols such as WiFi, Bluetooth, ZigBee etc.). Moreover, a display 123 can be connected to the processing unit 122 to allow a manual calibration of the system. Dotted lines in Fig. 1A represent an example layout of signal connections for communication between the devices 101-107.

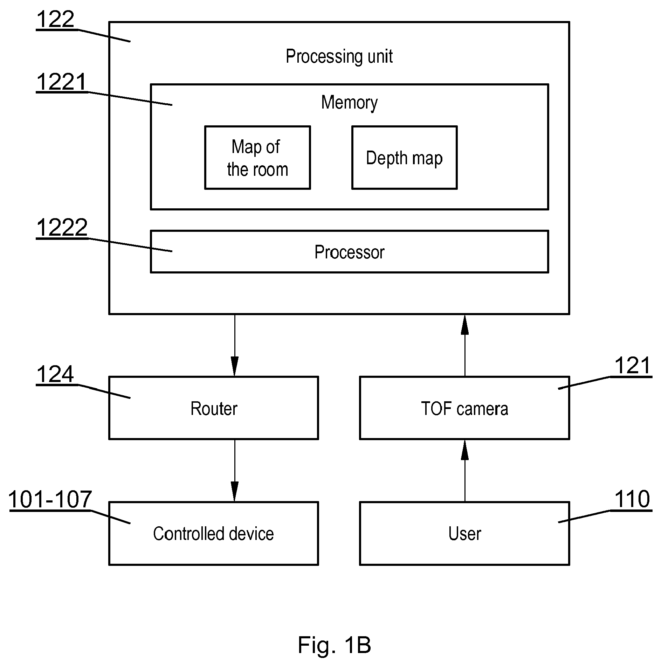

Fig. 1B shows an example of a processing unit 122 connected to the other devices. The processing unit 122 comprises a memory 1221, in which there are stored, for example, depth maps or maps of the room, as well as any other configuration data for controlling the system. The operation of the unit is controlled by a software executed by a processor 1222.

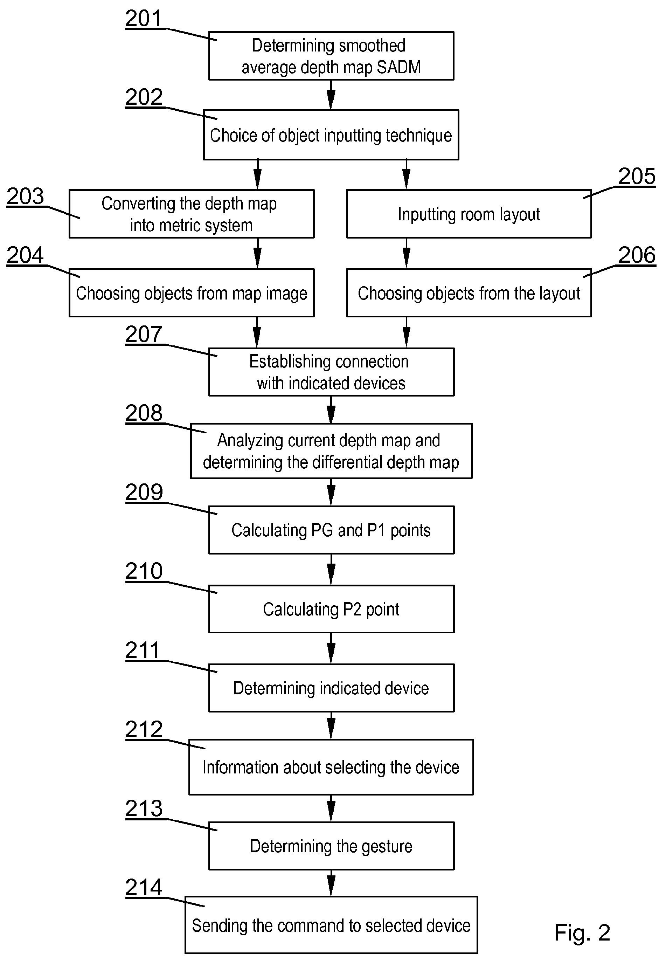

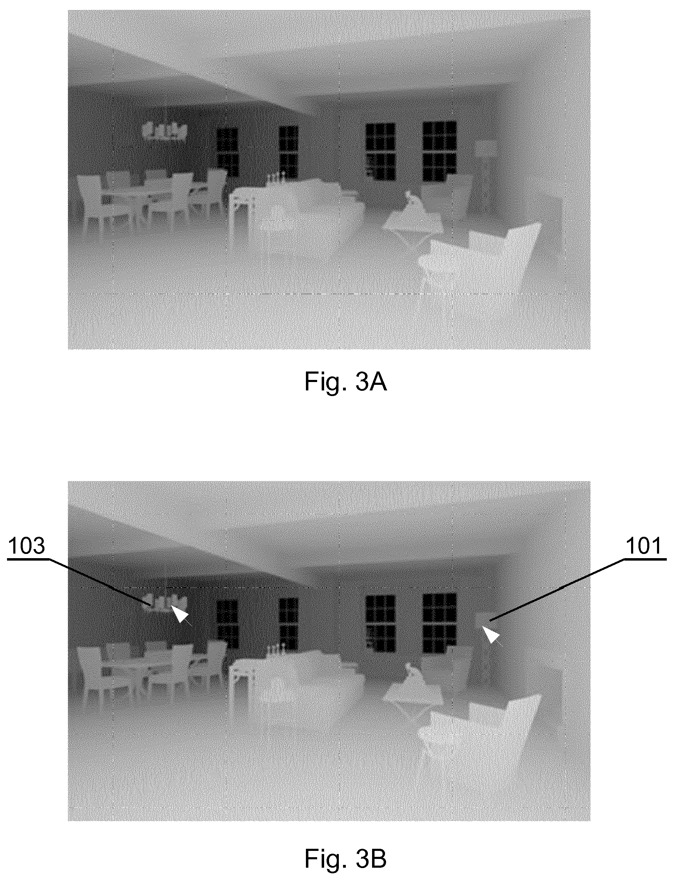

Fig. 2 shows a method for interaction with the devices. In step 201, an image of the observed area for an empty area (i.e. the area without the user) is read from the camera 121, in particular a depth map for this image. The depth map can be in a form of a bitmap having a resolution equal to the resolution of the image, wherein each pixel of the depth map determines the distance of a particular point of the image from the lens of the camera. A plurality of images can be retrieved, for example 30 images, and then an average depth value for each pixel can be calculated as an average for all images, in order to eliminate noise and other errors. Therefore, step 201 can be referenced as a preliminary calibration of the system. Step 201 results in an average depth map (ADM). Next, from the average depth map there can be deleted those pixels that represent a distance from the camera greater than a predetermined visibility threshold, i.e. larger than a distance at which a hand of the user should be located to control the system - resulting in a smoothed average depth map (SADM), shown in Fig. 3A (wherein, for example, pixels of the area behind the windows are removed). Next, in step 202, an method for inputting objects to the system is selected.

In the first method, comprising steps 203-204, the map of the room is converted in step 203 to a metric system based on the obtained depth map, and then in step 204 the depth map is displayed on the screen, for example on the display 123, and the user can select objects using a cursor and arrange them in categories. The values of selected points are stored in a metric system (for example, as XYZ coordinates expressed in meters with respect to the camera position). For example, as shown in Fig. 3B, the user can indicate the light source 101, 103 using the cursor.

In the second method, in step 205, a layout of the room (for example, a layout as shown in Fig. 1A) is prepared, into which the user inputs, in step 206, the coordinates of the objects and their categories. The advantage of this method is the possibility of controlling devices located beyond the field of view of the camera 121 as well. Then, it is only necessary for the user to be within the field of view of the camera and to be able to point towards the device located beyond this field of view. In such a case, it is necessary to indicate on the map of the room the position and the orientation of the camera 121, which should be determined as the center of the room coordinate system. Coordinates of all objects and corners of the walls should then have the center of the coordinate system in a position where the camera 121 is located.

Both methods deliver in consequence a metric system representation of the room. The Z axis extends in the direction of the center of the image from the camera (with positive values in the direction of view of the camera), and should be parallel to the plane of the floor. The Y coordinate represents a vertical direction with positive values directed upwards, and the X coordinate represents a horizontal axis, also parallel to the plane of the floor, with positive values directed to the right.

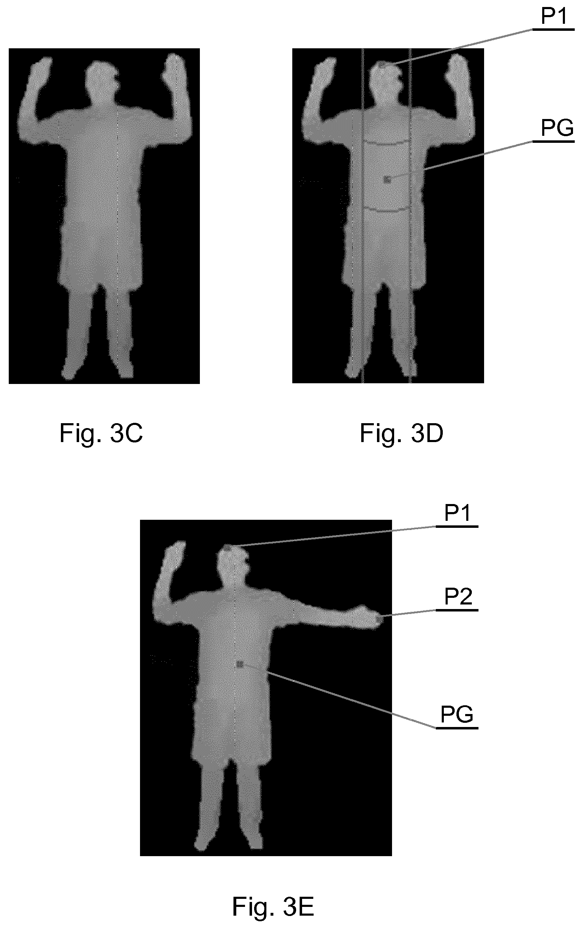

In step 207, the connection between the processing unit 122 and devices of the network selected by the user is established by the router 124. In step 208, the current image is retrieved from the camera 121, referenced to as the current depth map (CDM), which is compared with the smoothed average depth map (SADM), for example by determining the differences between the values of pixels, thereby obtaining a differential depth map (DDM), shown as an example in Fig. 3C - on this map only the user should be visible, as an object that is not present on the SADM.

In step 209 the center of gravity (from now on, referred to as the point of gravity - PG), as well as the highest point of the user, that is the head of the user (from now on, referred to as the head point - P1) are calculated. In order to do this, an iterative passage is made through all the points (vectors) of the differential depth map, then their values are added and divided by their quantity to obtain the point of gravity PG. In order to determine the head point, the point of the highest value of the Y coordinate is searched for, having the X and Z coordinates whose distance does not exceed for example 10 centimeters from the X and Z position of the point of gravity PG. In such a way, a cylindrical region is created, for example having a diameter of 20 centimeters, within which the point of the highest Y value is searched for. The result of step 209 is shown in Fig. 3D.

Next, in step 210, the point of the user's body which is the farthest from the point of gravity PG in the XZ plane is determined, and this point is assumed as the point of extended hand (from now on, referred to as the hand point P2). This step can be performed in a manner equivalent to determining the head point P1, wherein among all available vectors of a segmented user one vector is searched for, whose distance from the center of gravity in the XZ plane is the greatest, but not smaller than about 60 cm or 70 cm. In this manner, the point located the farthest can be identified and accepted as the extended hand point P2. In addition, to secure the system against unintended triggering, a threshold of said distance can be set, for example to a value between 60 and 70 cm, below which this set is not searched. In such a case, there is a risk that the point located the farthest will not be found (when the user has lowered or raised both hands). In such a situation, the system should not perform further steps, but should only analyze consecutive frames from the depth map, until such point is found. An example of a position of the user with all indicated points PG, P1 and P2 has been shown in Fig. 3E.

In step 211, the distance between the coordinates of the intelligent objects defined in the system and a half-line (P1-P2) extending from the head point P1 through the hand point P2 is calculated, and the device, whose distance from the half-line P1-P2 is the smallest is selected. For example, in the situation presented in Fig. 1A, the standing lamp 101 is selected. In this step, the maximum acceptable distance (AD) should be taken into account. This is because there are possible situations, in which the user's hand is extended, but does not point at any device. The maximum acceptable distance AD can have a value e.g. 50 cm.

In the next step 212, the user is informed about the selection of the device, preferably it is also indicated which device has been selected (by a particular sound signal or, for example, information on the display 123), and then a period of time can be reserved, for example 2 seconds, to await a possible motion of the user indicating the will to control the selected device. For example, if the camera 121 retrieves 30 frames per second, then during 2 seconds 60 frames of depth map will be processed, from which average values can be calculated (some frames may contain false values, which can be filtered out, for example 10% of frames with results deviating from the rest of the frames can be filtered out).

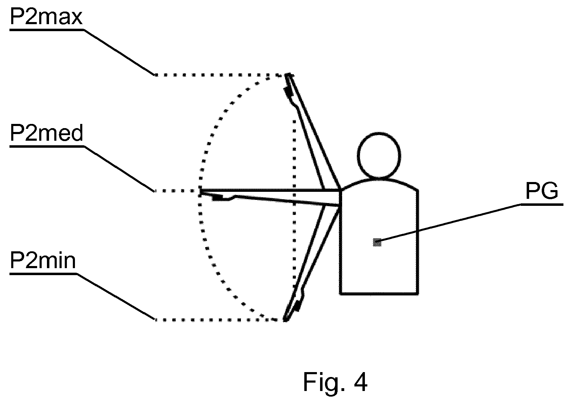

In the next step 213, a gesture can be received from the user, indicating the command to be sent to the selected device, for example a hand gesture (preferably, a palm gesture) in the Y axis. Examples of gestures are presented in Fig. 4. To initiate the controlling of the device, the earlier detected hand point P2 and its Y coordinate should be taken into account. Next, the change in the value of Y coordinate is tracked and on this basis the change of the property of the device is effected. Naturally, the user is not able to freely change the Y coordinate value. The limitation here is the maximal (P2max) and minimal (P2min) possible extension of the hand, taking into account the step concerned with finding the position of the hand. In such a case, the system should determine the allowed range in which the user is able to change the properties of the device. For example, if the value initiating the control of the device (P2med) of coordinate Y is 1,4 meters, then the maximal Y height (P2max) can be 1,8 meters, and the minimal (P2min) can be 1,2 meters. The system dynamically analyses the change of the hand point P2 and on this basis sends an adequate signal from the processing unit 122 through the router 124 to the selected device. The transmission protocol and a dependence between the change of value of the hand point P2 in the Y axis and the value of change of, for example, sound volume or the light bulb brightness, can be configured by adequate options of the control system. In case of turning the devices on and off, it may be sufficient to compare the values of the initial and current values of the position of the palm - if the current value is greater - the device may be turned on, and if the current value is lower - the device can be turned off.

It can be easily recognized, by one skilled in the art, that the aforementioned method and system may be performed and/or controlled by one or more computer programs. Such computer programs are typically executed by utilizing the computing resources in a computing device, which can be incorporated in various devices, such as personal computers, personal digital assistants, cellular telephones, receivers and decoders of digital television, TVs, displays or the like. Applications are stored on a non-transitory medium. An example of a non-transitory medium is a non-volatile memory, for example a flash memory or volatile memory, for example RAM. The computer instructions are executed by data processing unit, such as a processor. These memories are exemplary recording media for storing computer programs comprising computer-executable instructions performing all the steps of the computer-implemented method according the technical concept presented herein.

## Claims

1. A method for interacting with stationary devices by gestures, comprising receiving, in a processing unit (122) comprising a memory (1221) and a processor (1222), gestures of a user's hand captured using a depth camera (121) and sending commands to stationary devices (101-107) using a router (124), **characterized by** performing the following steps in the processing unit (122):
- retrieving from the depth camera (121) a signal representing a series of depth maps, having a bitmap form, for an unoccupied area, calculating an average depth map (ADM) and storing the average depth map (ADM) in the memory (1221);
- determining positions of the stationary devices (101-107);
- retrieving from the camera (121) a signal representing a current depth map (CDM), having a bitmap form;
- calculating a differential depth map (DDM) representing differences between the current depth map (CDM) and the average depth map (ADM);
- determining a point of gravity (PG) of the user in the differential depth map (DDM), and determining a head point (P1) and a hand point (P2) on the basis of the point of gravity (PG);
- determining a half-line (P1-P2) extending from the head point (P1) to the hand point (P2);
- selecting a device (101-107) that is located closest to the half-line (P1-P2) as the selected device;
- determining a gesture based on a change in the position of the hand point (P2) and a command corresponding to the determined gesture; and
- sending the command to the selected device (101-107) using the router (124).

2. The method according to claim 1, **characterized by** determining the position of the stationary devices (101-107) in a room by receiving from the user an indication on the depth map image.

3. The method according to claim 1, **characterized by** determining the position of the controlled stationary devices (101-107) in a room by receiving from the user the indication on a floor plan.

4. The method according to claim 3, **characterized in that** the indication on the floor plan of the stationary devices (101-107) can be specified beyond the camera visibility area (121).

5. The method according to claim 1, **characterized by** selecting the controlled device (101-107) located closest to the half-line (P1-P2) only when it is located within a distance shorter than a predetermined acceptable distance (AD).

6. A system for interacting with stationary devices by gestures, comprising a processing unit (122) with a memory (1221) and a processor (1222), connected to a depth camera (121) for receiving hand gestures of a user and connected to stationary devices (101-107) by a router (124), **characterized in that** the processing unit (122) is configured to perform the steps of the following method:
- retrieving from the depth camera (121) a signal representing a series of depth maps, having a bitmap form, for an unoccupied area, calculating an average depth map (ADM) and storing the average depth map (ADM) in the memory (1221);
- determining positions of the stationary devices (101-107);
- retrieving from the camera (121) a signal representing a current depth map (CDM), having a bitmap form;
- calculating a differential depth map (DDM) representing differences between the current depth map (CDM) and the average depth map (ADM);
- determining a point of gravity (PG) of the user in the differential depth map (DDM), and determining a head point (P1) and a hand point (P2) on the basis of the point of gravity (PG);
- determining a half-line (P1-P2) extending from the head point (P1) to the hand point (P2);
- selecting a device (101-107) that is located closest to the half-line (P1-P2) as the selected device;
- determining a gesture based on a change in the position of the hand point (P2) and a command corresponding to the determined gesture; and
- sending the command to the selected device (101-107) using the router (124).
